(19) Europäisches Patentamt
European Patent Office
Office européen des brevets

(11) **EP 3 467 534 B1**

(12) **FASCICULE DE BREVET EUROPEEN**

(45) Date de publication et mention
de la délivrance du brevet:
**03.11.2021 Bulletin 2021/44**

(51) Int Cl.:
*G01S 5/02* *(2010.01)*
*G01C 21/20* *(2006.01)*
*H04W 4/02* *(2018.01)*
*G01C 21/16* *(2006.01)*
*G01C 22/00* *(2006.01)*

(21) Numéro de dépôt: **18198232.3**

(22) Date de dépôt: **02.10.2018**

(54) **PROCÉDÉ DE LOCALISATION DE DISPOSITIFS MOBILES DANS UN REPÈRE COMMUN**

LOKALISIERUNGSVERFAHREN VON MOBILEN VORRICHTUNGEN IN EINEM GEMEINSAMEN REFERENZRAHMEN

METHOD FOR LOCATING MOBILE DEVICES IN A COMMON COORDINATE SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.10.2017 FR 1759405**

(43) Date de publication de la demande:
**10.04.2019 Bulletin 2019/15**

(73) Titulaire: **Commissariat à l'énergie atomique et aux énergies alternatives**
**75015 Paris (FR)**

(72) Inventeurs:
• **PEREIRA DA SILVA, Alex**
**38400 SAINT MARTIN D'HERES (FR)**
• **LEIRENS, Sylvain**
**38119 PIERRE CHATEL (FR)**

(74) Mandataire: **Brevalex**
**95, rue d'Amsterdam**
**75378 Paris Cedex 8 (FR)**

(56) Documents cités:
WO-A1-2017/084468    US-A1- 2013 307 723
US-A1- 2015 219 745    US-B1- 6 580 978

**Description**

**DOMAINE TECHNIQUE**

Le domaine de l'invention est celui des réseaux de communication sans fil. L'invention porte sur le suivi de déplacements réalisés par des dispositifs mobiles dans un environnement où ils détectent des bornes d'accès sans fil à un réseau de communication, telles que des bornes Wi-Fi, et plus particulièrement sur une technique pour obtenir une représentation de ces déplacements dans un repère commun.

**ÉTAT DE LA TECHNIQUE ANTÉRIEURE**

On considère plusieurs appareils de communication sans fil transportés par des utilisateurs ou intégrés dans des robots. Les utilisateurs ou les robots se déplacent dans un environnement (par exemple dans un bâtiment) où les appareils de communication sans fil sont susceptibles de détecter des bornes d'accès à un réseau de communication, typiquement des bornes Wi-Fi. On cherche à suivre les déplacements effectués par les appareils de communication sans fil, et plus particulièrement à représenter les localisations des dispositifs mobiles dans un repère commun.

Les approches existantes pour représenter les déplacements d'utilisateurs dans un repère commun tiennent compte de la connaissance préalable des positions absolues des sources radio (voir par exemple WO 2013/141991 A1), d'une cartographie de la puissance en réception dans l'environnement (carte RSSI pour « Received Signal Strength Indicator ») (voir par exemple R. Liu et al., Selective AP-sequence Based Indoor Localization without Site Survey, Vehicular Technology Conférence (VTC Spring), 2016), ou de mesures précises de l'un des déplacements (voir par exemple WO 2012/167301 A1).

Le document WO 2017/084468 A1 décrit un procédé appliqué à un premier dispositif en mouvement. Selon ce procédé, le premier dispositif établit un repère de référence et acquiert une forme de trajectoire de mouvement d'un deuxième dispositif et n données de positionnement. Les données de positionnement comprennent une valeur de paramètre de positionnement du deuxième dispositif et une valeur de coordonnées du repère de référence, et la valeur du paramètre de positionnement comprend au moins l'une de l'indication d'intensité du signal reçu, de la valeur de mesure de distance et de l'angle relatif. Le premier dispositif détermine une trajectoire de mouvement du deuxième dispositif dans le repère de référence, sur la base de la forme de trajectoire de mouvement et des n données de positionnement.

**EXPOSÉ DE L'INVENTION**

L'invention a pour objectif d'autoriser une telle représentation des déplacements dans un repère commun sans nécessiter de connaissance préalable d'une cartographie radio de l'environnement ou des positions absolues des bornes et/ou des dispositifs mobiles.

L'invention concerne à cet effet un procédé de localisation de dispositifs mobiles selon la revendication 1.

Certains aspects préférés mais non limitatifs de ce procédé sont définis dans les revendications dépendantes 2 à 10.

**BRÈVE DESCRIPTION DES DESSINS**

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

- la figure 1 est un schéma représentant une reconstruction de trajectoire suivie par un dispositif mobile lors d'un déplacement au moyen d'une navigation à l'estime pour piéton ;
- la figure 2 est un schéma illustrant une sélection des bornes d'accès en vue de la réalisation d'une analyse procustéenne ;
- la figure 3 est un schéma illustrant une transformation procustéenne permettant de faire coïncider un nuage de points constitué des localisations des bornes dans un repère lié à un dispositif mobile avec un nuage de points constitués des localisations des bornes dans un repère de référence ;

- la figure 4 est un schéma représentant des trajectoires réelles et des trajectoires estimées par la mise en œuvre du procédé selon l'invention ;
- les figures 5a, 5b et 5c représentent respectivement une cartographie RSSI réellement générée par trois bornes Wi-Fi dans un bâtiment, les mesures RSSI effectuées par trois dispositifs mobiles en déplacement dans le bâtiment et localisées dans celui-ci par la mise en œuvre du procédé selon l'invention et une cartographie RSSI estimée par interpolation des mesures RSSI.

## EXPOSÉ DÉTAILLÉ DE MODES DE RÉALISATION PARTICULIERS

L'invention concerne un procédé de localisation de dispositifs mobiles dans un repère commun, les dispositifs mobiles effectuant des déplacements au cours desquels chaque dispositif mobile évolue librement dans son environnement en réalisant des mesures d'un indicateur lié à la distance le séparant de bornes d'accès à un réseau de communication.

Chaque dispositif mobile est un appareil de communication sans fil transporté par un utilisateur ou intégré dans un robot. L'utilisateur ou le robot effectue un déplacement dans un environnement où l'appareil de communication sans fil est susceptible de détecter une ou plusieurs bornes d'accès. Dans un exemple de réalisation, le dispositif mobile est un téléphone intelligent (*smartphone*) et les bornes d'accès sont des bornes Wi-Fi. L'invention s'étend toutefois à d'autres types de dispositifs, ainsi qu'à d'autres types de bornes d'accès comme des balises Bluetooth ou des stations de bases d'un réseau cellulaire.

Le procédé selon l'invention comprend une étape, mise en œuvre pour chaque dispositif mobile, de reconstruction d'une trajectoire modélisant un déplacement effectué par le dispositif mobile. Cette reconstruction met en œuvre un algorithme d'odométrie exploitant des mesures réalisées par un ou plusieurs des capteurs embarqués au sein du dispositif mobile. La reconstruction peut être réalisée au sein du dispositif mobile, et les données de la reconstruction peuvent être collectées par un serveur. Alternativement, les mesures sont directement transmises au serveur, lequel vient procéder à la reconstruction de la trajectoire.

Dans un mode de réalisation possible, l'algorithme d'odométrie est une navigation à l'estime pour piéton (PDR pour « Pedestrian Dead Reckoning ») mettant en œuvre une détection de pas et de changement de direction de marche lors du déplacement. La détection de pas est typiquement réalisée au moyen d'un accéléromètre et la détection de changement de direction est typiquement réalisée au moyen d'un gyroscope ou gyromètre. Une telle navigation à l'estime est compatible avec une mise en œuvre en intérieur (« indoor »), notamment en ce qu'elle ne nécessite pas d'avoir recours à des capteurs magnétiques. La trajectoire reconstruite est ainsi constituée d'une succession de segments rectilignes, où chaque extrémité d'un segment modélise un pas et où un angle entre deux segments successifs modélise un changement de direction de marche.

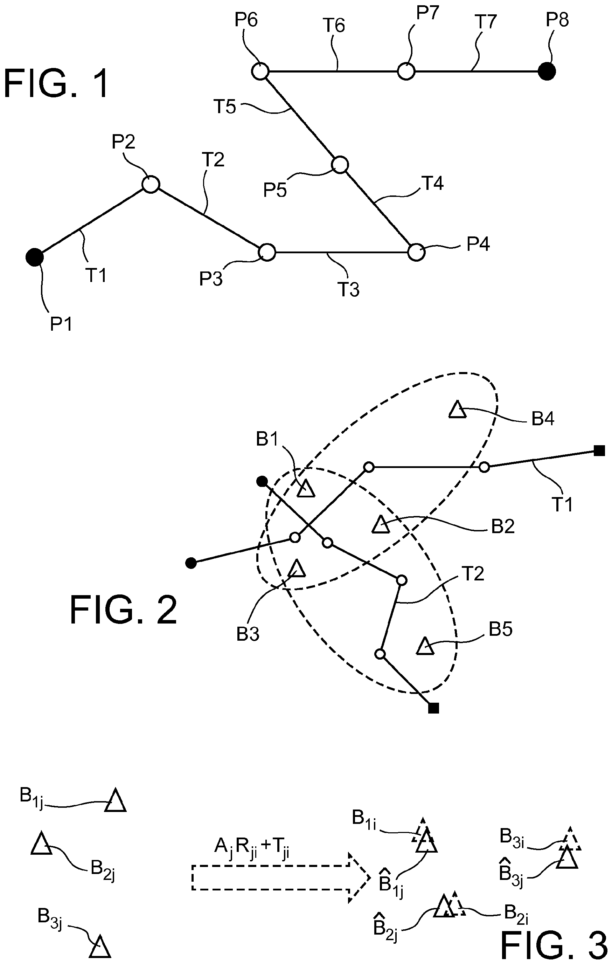

On a représenté sur la figure 1 un exemple de reconstruction d'une trajectoire suivie par un dispositif mobile lors d'un déplacement. La trajectoire comprend sept segments T1-T7 dont les extrémités P1-P8 correspondent à des pas réalisés par l'utilisateur du dispositif mobile. Un angle non nul entre deux segments successifs (par exemple entre les segments T1 et T2) est représentatif d'un changement de direction de marche (réalisé au pas P2 dans cet exemple). Chacun des pas est horodaté, avec $t_{sj}$ l'instant où le pas s d'un utilisateur j est détecté.

L'invention s'étend à d'autres méthodes de reconstruction de trajectoire, comme le « ranging », qui est une technique permettant à des robots de détecter des obstacles dans l'environnement à l'aide de capteurs (cameras, LIDAR, SONAR, etc.) dont ils sont équipé. Si les positions des obstacles sont connues, le robot peut tracer toute sa trajectoire (déplacement et changement de direction).

L'invention vise à positionner les trajectoires ainsi reconstruites les unes par rapport aux autres en les transformant dans un repère commun. L'invention exploite pour cela le fait que malgré leur indépendance, les trajectoires sont liées entre elles par la localisation des bornes d'accès dans le repère de chaque trajectoire.

Le procédé selon l'invention comprend à cet effet une étape de calcul, pour chaque dispositif mobile, des localisations des bornes d'accès dans un repère lié au dispositif mobile. Ces localisations sont plus précisément calculées, de manière connue en soi, à partir des mesures de l'indicateur réalisées par le dispositif mobile, ces mesures permettant d'estimer les distances entre les bornes et le dispositif mobile. L'indicateur mesuré peut par exemple être le temps aller-retour RTT (« Round-Trip Time »), la différence du temps d'arrivée TDoA (« Time Différence of Arrival »), l'angle d'arrivée AoA (« Angle of Arrival »), ou la puissance en réception (« Received Signal Strength Indicator »).

Ce calcul des localisations des bornes d'accès dans un repère lié à un dispositif mobile peut être réalisé par le dispositif lui-même, et les localisations ainsi calculées peuvent être collectées par un serveur. Alternativement, les mesures de l'indicateur réalisées par un dispositif mobile sont directement collectées par un serveur, ce serveur venant calculer les localisations des bornes d'accès à partir des mesures collectées.

Lors de son déplacement, le dispositif mobile détecte des bornes d'accès et réalise, pour chacune des bornes d'accès, des mesures de l'indicateur dont la valeur varie par exemple approximativement selon l'inverse de la distance séparant le dispositif mobile (à l'instant de réalisation de la mesure) de la borne d'accès correspondant à la mesure. Connaissant les instants de réalisation des mesures de l'indicateur ($t_{kj}$ étant l'instant où la k-ième mesure est réalisée par l'utilisateur j), et la trajectoire reconstruite (avec $t_{sj}$ l'instant où le pas s d'un utilisateur j est détecté et ($\overline{x}_{sj}$, $\overline{y}_{sj}$) la localisation du pas s estimée par la reconstruction de trajectoire dans un repère lié à l'utilisateur), il est possible de déterminer la localisation de réalisation de chacune des mesures sur la trajectoire. Par exemple, lorsque $t_{s-1j} < t_{kj} \leq t_{sj}$, la localisation $(x_{kj}, y_{kj})$ de réalisation de la k-ième mesure de l'utilisateur $j$ s'exprime selon :

$$\begin{cases} x_{kj} = \bar{x}_{sj} - \Delta t_{ksj}(\bar{x}_{sj} - \bar{x}_{s-1j}) \\ y_{kj} = \bar{y}_{sj} - \Delta t_{ksj}(\bar{y}_{sj} - \bar{y}_{s-1j}) \end{cases}, \text{ avec } \Delta t_{ksj} = \frac{t_{sj} - t_{kj}}{t_{sj} - t_{s-1j}}.$$

Puis connaissant les mesures de l'indicateur et leurs localisations$(x_{ky}, y_{kj})$, il est possible de déterminer les localisations des bornes d'accès dans un repère lié au dispositif mobile.

Le serveur mentionné précédemment réalise ensuite une transformation des différentes trajectoires dans un repère commun. Plus particulièrement, le serveur met en œuvre une étape de détermination, pour chaque dispositif mobile, d'une transformation géométrique venant transformer les localisations des bornes dans le repère lié au dispositif mobile en des localisations transformées dans un repère commun. Cette détermination est réalisée de sorte à superposer au sens d'une métrique de validité de la superposition, pour chaque borne, les localisations de la borne transformées dans le repère commun avec une localisation de la borne dans le repère commun.

Cette détermination met typiquement en œuvre une analyse procustéenne pour identifier la transformation géométrique qui lorsqu'elle est appliquée au nuage de points constitué des localisations des bornes dans un repère lié à un dispositif mobile permet de faire coïncider le nuage transformé avec le nuage de points constitués des localisations des bornes dans le repère commun.

Cette transformation géométrique peut s'exprimer comme une transformation linéaire (translation, rotation, symétrie et homothétie) des points d'une matrice $A_j$ pour qu'ils se superposent de manière optimale aux points d'une matrice $A_{ref}$. Elle peut s'écrire selon $A_{ref} = A_j R_{jref} + T_{jref}$, où $R_{jref}$ et $T_{jref}$ sont respectivement la matrice de rotation/symétrie et la matrice de translation traduisant la transformation géométrique des points de $A_j$ pour qu'ils coïncident avec ceux de $A_{ref}$ au sens de la métrique de validité de la superposition. Dans le cadre de l'invention, $A_j$ est la matrice des localisations

$$A_j = \begin{bmatrix} x_{1j} & y_{1j} \\ x_{2j} & y_{2j} \\ \vdots & \vdots \\ x_{Nj} & y_{Nj} \end{bmatrix}$$

des N bornes dans le repère associé au dispositif mobile j définie comme                                    et $A_{ref}$ est la matrice

$$A_{ref} = \begin{bmatrix} x_{1ref} & y_{1ref} \\ x_{2ref} & y_{2ref} \\ \vdots & \vdots \\ x_{Nref} & y_{Nref} \end{bmatrix}$$

des localisations des bornes dans le repère commun définie comme                                    . Pour $A_{ref}$ et $A_j$ connus, les matrices $R_{jref}$ et $T_{jref}$ peuvent être construites à partir de la suppression des composantes de translation, rotation et symétrie sur les données des matrices $A_{ref}$ et $A_j$.

La métrique utilisée est typiquement une distance entre le nuage transformé et le nuage de référence. On cherche par exemple la transformation qui minimise la somme des carrés des écarts entre la localisation d'une borne transformée dans le repère commun et la localisation de la borne dans le repère commun.

Cette étape de détermination des matrices $R_{jref}$ et $T_{iref}$ peut être précédée d'une étape de sélection des bornes d'accès consistant à ne retenir que des bornes dont l'incertitude de localisation dans chacun des repères liés à un dispositif mobile est inférieure à un seuil. Sur la figure 2 qui illustre cette sélection, l'estimation de la localisation de la borne B5 à partir par exemple de mesures RSSI réalisées le long de la trajectoire T1 est insuffisamment précise car l'utilisateur est toujours loin de la borne. Il en est de même de la localisation de la borne B4 pour la trajectoire T2. Dans un tel cas de figure, on sélectionne les bornes B1, B2, B3 pour effectuer l'analyse procustéenne. Une fois les trajectoires transformées dans le repère commun, on peut venir y positionner les bornes B4, B5. On note que cette approche permet aux trajectoires d'avoir l'information de localisation de bornes non détectables (comme pourrait l'être par exemple la borne B4 pour la trajectoire T2).

Dans un premier mode de réalisation, le repère commun est un repère absolu basé par exemple sur la connaissance de la position absolue d'une borne ou d'une position absolue d'un utilisateur (par exemple sa position initiale à l'entrée d'un bâtiment).

Dans un second mode de réalisation, le repère commun est l'un des repères liés aux dispositifs mobiles. On peut sélectionner ce repère commun de manière aléatoire. Alternativement, on peut sélectionner le repère associé à la trajectoire pour laquelle les mesures de l'indicateur (et de là le calcul des localisations des bornes dans ce repère) sont les moins incertaines. La position (0,0) de ce repère commun est par exemple définie par l'un des pas de la trajectoire correspondante. La transformation associée au repère sélectionné est alors la transformation identité.

On a représenté sur la figure 3 un schéma illustrant la transformation procustéenne permettant de faire coïncider

$$A_j = \begin{bmatrix} B_{1j} \\ B_{2j} \\ B_{2j} \end{bmatrix}$$

un nuage de points constitué des localisations des bornes dans un repère lié à un dispositif mobile avec

$$A_i = \begin{bmatrix} B_{1i} \\ B_{2i} \\ B_{2i} \end{bmatrix}$$

le nuage de points constitués des localisations des bornes dans un repère lié à un autre dispositif mobile sélectionné comme repère commun ($i = $ ref). Cette transformation $A_j R_{ji} + T_{ji}$ transforme les localisations $B_{1j}$, $B_{2j}$, $B_{3j}$ en localisations transformées $\hat{B}_{1j}$, $\hat{B}_{2j}$, $\hat{B}_{3j}$ qui coïncident, au sens des moindres carrés par exemple, avec les localisations des bornes dans le repère commun sélectionné $B_{1i}$, $B_{2i}$, $B_{3i}$.

On constate de la figure 3 que les localisations transformées $\hat{B}_{1j}$, $\hat{B}_{2j}$, $\hat{B}_{3j}$ ne coïncident pas parfaitement avec les localisations des bornes dans le repère commun sélectionné $B_{1i}$, $B_{2i}$, $B_{3i}$. Ainsi, dans un troisième mode de réalisation, on procède à une construction du repère commun par transformation dans un repère de référence et correction de la position des bornes dans le repère de référence. Pour cela, on réalise tout d'abord la sélection d'un repère de référence, par exemple parmi les repères liés aux dispositifs mobiles. Puis on vient déterminer, pour chaque dispositif mobile, une première transformation géométrique venant transformer les localisations des bornes dans le repère lié au dispositif mobile en des localisations transformées dans le repère de référence. Cette détermination est réalisée de sorte à superposer au sens de la métrique de validité de la superposition, pour chaque borne, les localisations de la borne transformées dans le repère de référence avec la localisation de la borne dans le repère de référence. Ces deux étapes permettent d'aboutir à la situation représentée en figure 3.

Ce troisième mode de réalisation comprend ensuite la détermination, pour chaque borne, de la localisation de la borne d'accès dans le repère commun en fonction des localisations transformées dans le repère de référence. On vient ainsi remplacer la localisation de chaque borne par une localisation corrigée. Prenant l'exemple de la borne n°1, on exploite les localisations transformées dans le repère de référence $B_{1i}$, $\hat{B}_{1j}$ pour calculer une localisation de la borne d'accès dans le repère commun $B_{1ref}$. La localisation corrigée correspond par exemple à la moyenne ou à la médiane des localisations transformées dans le repère de référence. La médiane s'avère plus robuste que la moyenne à de possibles localisations aberrantes des bornes. On peut aussi calculer une moyenne pondérée. Le poids associé à chaque localisation transformée dans le repère de référence correspond par exemple à une incertitude associée à cette localisation (par exemple une incertitude sur l'axe des abscisses et une incertitude sur l'axe des ordonnées).

Une fois ce repère commun construit (connaissance des localisations $B_{nref}$ des bornes), on procède comme précédemment décrit en la détermination des transformations géométriques permettant de rapprocher les localisations des bornes dans les repères des trajectoires avec les localisations des bornes dans le repère commun.

Puis, dans l'un ou l'autre des modes de réalisation précédemment décrits, une fois les transformations géométriques vers le repère commun déterminées (on connait pour chaque dispositif i les matrices de transformation dans le repère commun $R_{iref}$ et $T_{iref}$), on vient pour chaque dispositif mobile, modifier la trajectoire du dispositif mobile en lui appliquant la transformation géométrique correspondante. On calcule ainsi $\tilde{U}_i = U_i R_{iref} + T_{iref}$, avec $U_i$ la matrice des positions des pas de l'utilisateur dans le repère de sa trajectoire i, et $\tilde{U}_i$ la matrice des positions de pas de ce même utilisateur dans le repère commun.

Lorsque le nombre de pas P d'une trajectoire est supérieur au nombre N de bornes d'accès, on procède à un découpage de la trajectoire en sections successives chacune constituée d'un nombre de points (pas) identique au nombre N de bornes d'accès. Puis on procède à l'application de la transformation géométrique correspondante à chacune des sections. En d'autres termes, on vient construire des matrices $U_i$ de même dimension que les matrices $A_i$. Et lorsque la division de P par N comporte un reste, une matrice $U_i$ peut comporter une répétition de pas.

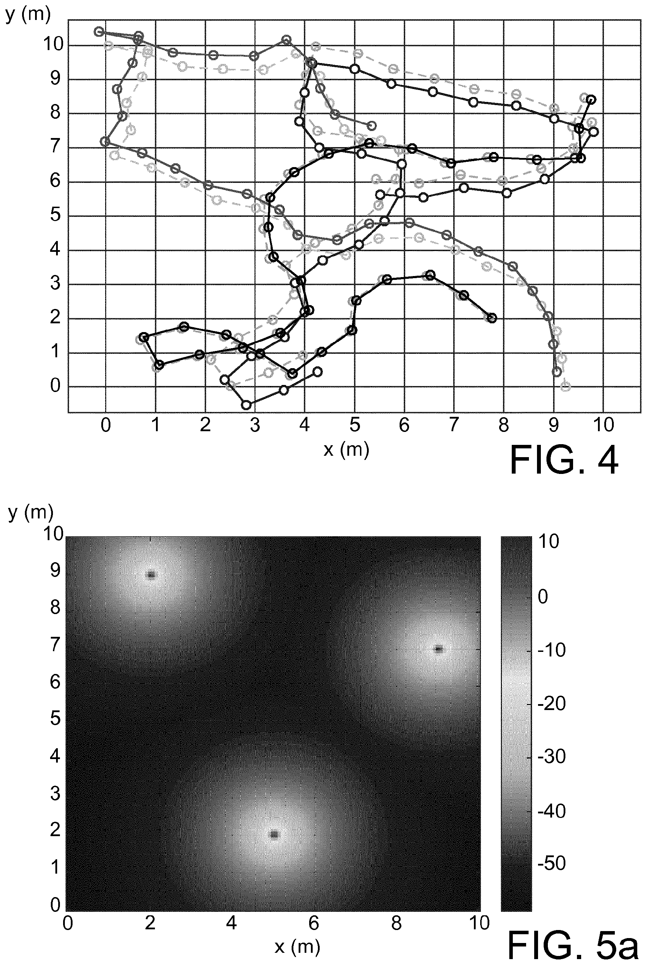

La figure 4 est un schéma représentant des trajectoires réelles (en traits pointillés) et des trajectoires estimées (en trais pleins) par la mise en œuvre du procédé selon le troisième mode de réalisation de l'invention. Plus précisément, la figure 4 montre le déplacement de trois utilisateurs dans un bâtiment de dimension 10m x 10m. Chaque utilisateur fait 30 pas et les localisations de trois bornes Wi-Fi dans chaque repère associé à chaque trajectoire sont calculées. Les trajectoires estimées ont été mises dans le repère des trajectoires réelles pour comparer leurs positions les unes par rapport aux autres et, ainsi, pouvoir avoir une idée de la qualité de la reconstruction des trajectoires. Pour déterminer les localisations des bornes Wi-Fi dans le repère commun, on a utilisé la moyenne des localisations des bornes transformées dans un repère de référence correspondant à l'un des repères associés à la trajectoire d'un utilisateur.

La distance moyenne entre les pas réels $(x_i^{réel}, y_i^{réel})$ et les pas estimés $(x_i^{estimé}, y_i^{estimé})$ pour toutes

$$E = \frac{1}{MP} \sum_{i=1}^{MP} \sqrt{\left(x_i^{réel} - x_i^{estimé}\right)^2 + \left(y_i^{réel} - y_i^{estimé}\right)^2}$$

les trajectoires, à savoir , avec M le nombre de trajectoires et P le nombre de pas par trajectoire, est de 0.3388 mètres dans le cas d'usage de la figure 4.

La mise en œuvre du troisième mode de réalisation réduit statistiquement l'erreur $E$ définie ci-dessus. Le cas d'usage ici considéré comporte 10 utilisateurs qui se déplacent librement dans un bâtiment de dimension 20m x 20m. Chaque utilisateur fait un total de 30 pas et 10 bornes Wi-Fi sont positionnées aléatoirement dans le bâtiment. Pour parvenir à cette conclusion, on utilise ici la médiane des positions pour corriger les positions des bornes Wi-Fi dans un repère absolu. Sur un total de 267 simulations, dans approximativement 78.3 % des cas, l'erreur E est inférieure à celle calculée sans la correction de positions des bornes (premier mode de réalisation).

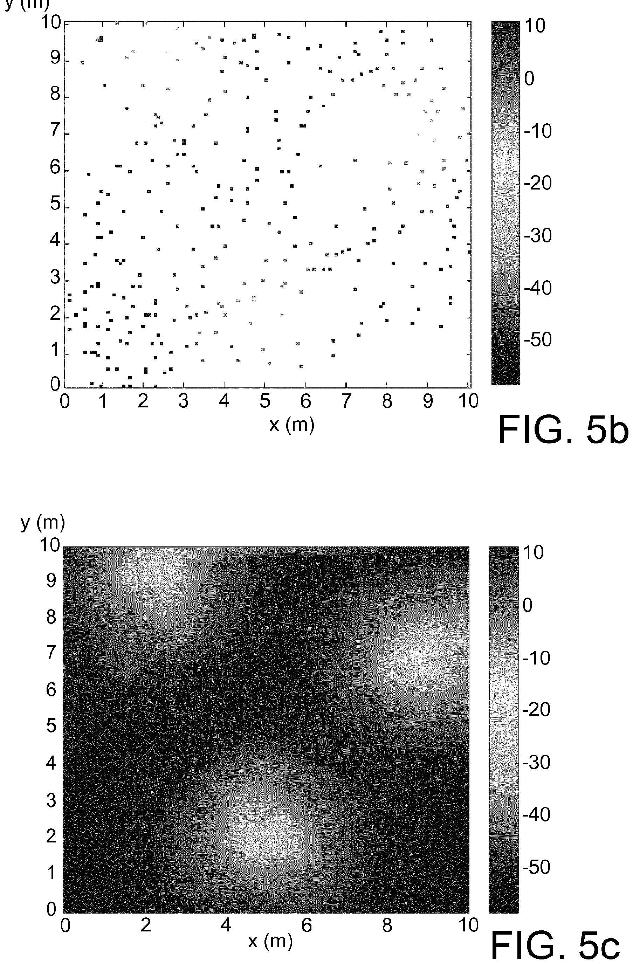

La transformation des trajectoires dans le repère de référence permet de construire une carte radio (par exemple carte RSSI) à partir des points des mesures des différents utilisateurs le long de leurs trajectoires. On assume que les instants de réalisation des mesures sont connus. Cela permet de déterminer où ces mesures ont été réalisées dans le repère lié à chaque trajectoire respective puis de déterminer les localisations de réalisation des mesures dans le repère de référence. On considère, par exemple, trois utilisateurs se déplaçant librement dans un bâtiment de dimension 10m x 10m avec trois bornes Wi-Fi. Chaque utilisateur effectue un total de 100 pas et, le long de sa trajectoire, 100 mesures RSSI ont été collectées (par exemple par un serveur). La figure 5a représente la cartographie RSSI réellement générée par les bornes Wi-Fi. La figure 5b représente les mesures RSSI effectuées par les utilisateurs, localisées dans le bâtiment par la mise en œuvre du procédé selon l'invention. La figure 5c représente quant à elle une reconstruction de la cartographie RSSI réalisée par interpolation des mesures RSSI de la figure 5b. On constate que la carte RSSI interpolée de la figure 5c est proche de la carte RSSI réelle de la figure 5a. L'erreur quadratique moyenne entre ces deux cartes (sur un total de 16384 points) est d'environ 2.15 mètres, pour une valeur moyenne de RSSI autour de -57 dBm pour les mesures.

Des applications possibles de l'invention sont les suivantes. Comme discuté ci-dessus, il est possible de construire des cartographies radio de l'environnement. Dès lors, une mesure RSSI réalisée pour un nouvel utilisateur arrivant dans l'environnement permet de le localiser.

Il est également possible de réaliser la localisation à l'intérieur d'un bâtiment d'un nouvel utilisateur arrivant dans le bâtiment à partir d'autres utilisateurs déjà localisés, par exemple selon la procédure suivante. Au moins une borne Wi-Fi détecte le nouvel utilisateur à travers un canal radio de communication. Un serveur collecte l'information de détection du nouvel utilisateur. Les données des utilisateurs (Wi-Fi + système de navigation) sont transmises par le serveur au nouvel utilisateur. Le RSSI de ce nouvel utilisateur peut être comparé avec les données RSSI connues des autres utilisateurs et une estimation de sa position est ainsi possible.

Il est également possible de réaliser la cartographie d'un bâtiment en venant positionner les trajectoires des utilisateurs dans un repère absolu lié au bâtiment puis en venant démarquer les régions où les utilisateurs se déplacent (par exemple des couloirs).

L'invention n'est pas limitée au procédé tel que précédemment, mais s'étend également à un appareil de traitement de données, tel que le serveur mentionné précédemment comprenant un processeur configuré pour mettre en œuvre les étapes de détermination (pour chaque dispositif mobile de la transformation géométrique vers le repère commun) et de modification (pour chaque dispositif mobile de la trajectoire correspondante par application de la transformation géométrique correspondante) de ce procédé. Et l'invention s'étend également à un produit programme d'ordinateur comprenant des instructions qui, lorsque le programme est exécuté par un ordinateur, conduisent celui-ci à mettre en œuvre les étapes de détermination et de modification de ce procédé.

## Revendications

**1.** Procédé de localisation de dispositifs mobiles, comprenant pour chaque dispositif mobile, la reconstruction d'une trajectoire (T1, T2) modélisant un déplacement effectué par le dispositif mobile au cours duquel le dispositif mobile réalise des mesures d'un indicateur lié à la distance le séparant de bornes d'accès (B1-B5) à un réseau de communication ; le procédé comprenant les étapes suivantes :

- pour chaque dispositif mobile, calcul, à partir des mesures réalisées par le dispositif mobile, des localisations $(B_{1j}, B_{2j}, B_{3j} ; B_{1i}, B_{2i}, B_{3i})$ des bornes dans un repère lié au dispositif mobile ;
- détermination, pour chaque dispositif mobile, d'une transformation géométrique venant transformer les localisations des bornes dans le repère lié au dispositif mobile en des localisations transformées dans un repère commun, ladite détermination étant réalisée de sorte à superposer au sens d'une métrique de validité de la superposition, pour chaque borne, les localisations de la borne transformées dans le repère commun avec une localisation de la borne dans le repère commun ;
- pour chaque dispositif mobile, modification de la trajectoire du dispositif mobile par application de la transformation géométrique correspondante.

2. Procédé selon la revendication 1, dans lequel le repère commun est l'un des repères liés aux dispositifs mobiles.

3. Procédé selon la revendication 1, dans lequel l'étape de détermination, pour chaque dispositif mobile, d'une transformation géométrique est précédée des étapes suivantes :

- sélection d'un repère de référence parmi les repères liés aux dispositifs mobiles ;
- détermination, pour chaque dispositif mobile, d'une première transformation géométrique venant transformer les localisations des bornes dans le repère lié au dispositif mobile en des localisations transformées dans le repère de référence ($\hat{B}_{1j}$, $\hat{B}_{2j}$, $\hat{B}_{3j}$), ladite détermination étant réalisée de sorte à superposer au sens de la métrique de validité de la superposition, pour chaque borne, les localisations de la borne transformées dans le repère de référence avec la localisation de la borne dans le repère de référence ($B_{1i}$, $B_{2i}$, $B_{3i}$);
- pour chaque borne, détermination de la localisation de la borne d'accès dans le repère commun en fonction des localisations transformées dans le repère de référence.

4. Procédé selon la revendication 3, dans lequel, pour chaque borne, la localisation de la borne d'accès dans le repère commun est déterminée par le calcul d'une moyenne pondérée ou de la médiane des localisations transformées dans le repère de référence.

5. Procédé selon la revendication 4, dans lequel la pondération appliquée à chacune des localisations transformées dans le repère de référence dans le calcul de la moyenne pondérée est une incertitude portant sur la localisation correspondante dans le repère lié au dispositif mobile.

6. Procédé selon l'une des revendications 1 à 5, dans lequel la modification, pour chaque dispositif mobile, de la trajectoire du dispositif mobile comprend un découpage de la trajectoire en sections successives chacune constituée d'un nombre de points identique au nombre de bornes d'accès, et l'application de la transformation géométrique correspondante à chacune des sections.

7. Procédé selon l'une des revendications 1 à 6, dans lequel la reconstruction de la trajectoire suivie par un dispositif mobile comprend une navigation à l'estime pour piéton mettant en œuvre une détection de pas et de changement de direction de marche lors du déplacement.

8. Procédé selon l'une des revendications 1 à 7, dans lequel la métrique de validité de la superposition est un indicateur représentatif de la distance, pour chaque borne d'accès, entre chacune des localisations transformées dans le repère de référence et la localisation de la borne d'accès dans le repère de référence.

9. Procédé selon l'une des revendications 1 à 8, dans lequel la détermination, pour chaque dispositif mobile, de la transformation géométrique est réalisée par une analyse procustéenne.

10. Procédé selon l'une des revendications 1 à 9, comprenant en outre une étape de localisation, dans le repère de référence, de mesures d'un indicateur de puissance en réception réalisées par les dispositifs mobiles lors de leurs déplacements, et une étape d'interpolation desdites mesures pour réaliser une cartographie de la puissance en réception.

11. Produit programme d'ordinateur comprenant des instructions qui, lorsque le programme est exécuté par un ordinateur, conduisent celui-ci à mettre en œuvre les étapes de détermination et de modification du procédé selon l'une des revendications 1 à 10.

12. Appareil de traitement de données comprenant un processeur configuré pour mettre en œuvre les étapes de détermination et de modification du procédé selon l'une des revendications 1 à 10.

**Patentansprüche**

1. Verfahren zur Lokalisierung von mobilen Geräten, umfassend für jedes mobile Gerät die Rekonstruktion einer Trajektorie (T1, T2), die eine von dem mobilen Gerät durchgeführte Bewegung modelliert, während der das mobile Gerät Messungen eines Indikators durchführt, der mit dem Abstand zwischen diesem und den Zugangspunkten (B1-B5) zu einem Kommunikationsnetz zusammenhängt;
   wobei das Verfahren die folgenden Schritte umfasst:

   - für jedes mobile Gerät Berechnen der Standorte ($B_{1j}$, $B_{2j}$, $B_{3j}$; $B_{1i}$, $B_{2i}$, $B_{3i}$) der Zugangspunkte in einem mit dem mobilen Gerät zusammenhängenden Bezugssystem anhand der von dem mobilen Gerät durchgeführten Messungen;
   - Bestimmen einer geometrischen Transformation für jedes mobile Gerät, die die Standorte der Zugangspunkte in dem mit dem mobilen Gerät zusammenhängenden Bezugssystem in transformierte Standorte in einem gemeinsamen Bezugssystem transformiert, wobei das Bestimmen so durchgeführt wird, dass im Sinne einer Gültigkeitsmetrik für die Überlagerung für jeden Zugangspunkt die transformierten Zugangspunktstandorte in dem gemeinsamen Bezugssystem mit einem Zugangspunktstandort in dem gemeinsamen Bezugssystem überlagert werden;
   - für jedes mobile Gerät Ändern der Trajektorie des mobilen Geräts durch Anwendung der entsprechenden geometrischen Transformation.

2. Verfahren nach Anspruch 1, wobei das gemeinsame Bezugssystem eines der Bezugssysteme ist, die mit den mobilen Geräten zusammenhängen.

3. Verfahren nach Anspruch 1, wobei dem Schritt des Bestimmens einer geometrischen Transformation für jedes mobile Gerät die folgenden Schritte vorausgehen:

   - Auswählen eines Referenzbezugssystems aus den mit den mobilen Geräten zusammenhängenden Bezugssystemen;
   - Bestimmen, für jedes mobile Gerät, einer ersten geometrischen Transformation, die die Standorte der Zugangspunkte in dem mit dem mobilen Gerät zusammenhängenden Bezugssystem in transformierte Standorte in dem Referenzbezugssystem ($\hat{B}_{1j}$, $\hat{B}_{2j}$, $\hat{B}_{3j}$) transformiert, wobei das Bestimmen so durchgeführt wird, dass im Sinne der Gültigkeitsmetrik für die Überlagerung für jeden Zugangspunkt die transformierten Zugangspunktstandorte im Referenzbezugssystem mit dem Zugangspunktstandort im Referenzbezugssystem ($B_{1i}$, $B_{2i}$, $B_{3i}$) überlagert werden;
   - für jeden Zugangspunkt Bestimmen des Standorts des Zugangspunktes im gemeinsamen Bezugssystem in Abhängigkeit von den transformierten Standorten im Referenzbezugssystem.

4. Verfahren nach Anspruch 3, wobei für jeden Zugangspunkt der Standort des Zugangspunktes im gemeinsamen Bezugssystem durch Berechnung eines gewichteten Mittelwerts oder Medians der transformierten Standorte im Referenzbezugssystem bestimmt wird.

5. Verfahren nach Anspruch 4, wobei die Gewichtung, die bei der Berechnung des gewichteten Mittelwerts auf jeden der transformierten Standorte im Referenzbezugssystem angewendet wird, eine Unsicherheit über den entsprechenden Standort in dem Bezugssystem betrifft, das mit dem mobilen Gerät zusammenhängt.

6. Verfahren nach einem der Ansprüche 1 bis 5, wobei die Modifikation der Trajektorie des mobilen Geräts für jedes mobile Gerät das Zerschneiden der Trajektorie in aufeinanderfolgende Abschnitte umfasst, die jeweils aus einer Anzahl von Punkten bestehen, die der Anzahl der Zugangspunkte entspricht, sowie das Anwenden der entsprechenden geometrischen Transformation auf jeden der Abschnitte.

7. Verfahren nach einem der Ansprüche 1 bis 6, wobei die Rekonstruktion der von einem mobilen Gerät verfolgten Trajektorie eine Koppelnavigation für Fußgänger umfasst, die eine Schritt- und Richtungsänderungserkennung während der Fortbewegung implementiert.

8. Verfahren nach einem der Ansprüche 1 bis 7, wobei die Gültigkeitsmetrik der Überlagerung ein Indikator ist, der für jeden Zugangspunkt repräsentativ ist für den Abstand zwischen jedem der transformierten Standorte im Referenzbezugssystem und dem Standort des Zugangspunktes im Referenzbezugssystem.

9. Verfahren nach einem der Ansprüche 1 bis 8, wobei das Bestimmen der geometrischen Transformation für jedes mobile Gerät durch eine Procrustes-Analyse durchgeführt wird.

10. Verfahren nach einem der Ansprüche 1 bis 9, ferner umfassend einen Schritt des Lokalisierens von Messungen eines Empfangsleistungsindikators, die von den mobilen Geräten während ihrer Bewegungen vorgenommen werden, in dem Referenzbezugssystem, sowie einen Schritt des Interpolierens der Messungen zur Erstellung einer Karte über die Empfangsleistung.

11. Computerprogrammprodukt, das Anweisungen enthält, die, wenn das Programm von einem Computer ausgeführt wird, den Computer veranlassen, die Schritte des Bestimmens und Modifizierens des Verfahrens nach einem der Ansprüche 1 bis 10 auszuführen.

12. Datenverarbeitungsgerät mit einem Prozessor, der dazu ausgelegt ist, die Schritte des Bestimmens und Modifizierens des Verfahrens nach einem der Ansprüche 1 bis 10 auszuführen.

**Claims**

1. A method for locating mobile devices comprising for each mobile device, for each mobile device, reconstructing a trajectory (T1, T2) modelling a movement made by the mobile device during which the mobile device carries out measurements of an indicator related to the distance separating it from access terminals (B1-B5) to a communication network, said method comprising the following steps:

   - for each mobile device, calculating, from the measurements carried out by the mobile device, locations ($B_{1j}$, $B_{2j}$, $B_{3j}$ ; $B_{1i}$, $B_{2i}$, $B_{3i}$) of the access terminals in a frame of reference associated to the mobile device;
   - determining, for each mobile device, a geometric transformation that transforms the locations of the access terminals in the frame of reference associated to the mobile device into locations transformed in a common frame of reference, said determining being carried out so as to superimpose according to a superimposition validity metric, for each access terminal, the locations of the access terminal transformed in the common frame of reference with a location of the access terminal in the common frame of reference;
   - for each mobile device, modifying the trajectory of the mobile device by applying the corresponding geometric transformation.

2. The method according to claim 1, wherein the common frame of reference is one of the frames of reference associated to the mobile devices.

3. The method according to claim 1, wherein the step of determining, for each mobile device, a geometric transformation is preceded by the following steps:

   - selecting a reference frame of reference among the frames of reference associated to the mobile devices;
   - determining, for each mobile device, a first geometric transformation that transforms the locations of the access terminals in the frame of reference associated to the mobile device into locations transformed in the reference frame of reference ($\hat{B}_{1j}$, $\hat{B}_{2j}$, $\hat{B}_{3j}$) said determination being carried out so as to superimpose according to the superimposition validity metric, for each access terminal, the locations of the access terminal transformed in the reference frame of reference with the location of the access terminal in the reference frame of reference ($B_{1i}$, $B_{2i}$, $B_{3i}$);
   - for each access terminal, determining the location of the access terminal in the common frame of reference as a function of the locations transformed in the reference frame of reference.

4. The method according to claim 3, wherein, for each access terminal, the location of the access terminal in the common frame of reference is determined by the calculation of a weighted average or the median of the locations transformed in the reference frame of reference.

5. The method according to claim 4, wherein the weighting applied to each of the locations transformed in the reference frame of reference in the calculation of the weighted average is an uncertainty concerning the corresponding location in the frame of reference associated to the mobile device.

6. The method according to any claim 1 to 5, wherein modifying, for each mobile device, the trajectory of the mobile device includes chopping the trajectory into successive sections each constituted of a number of points identical to the number of access terminals, and the application of the corresponding geometric transformation to each of the sections.

7.  The method according to any claim 1 to 6, wherein reconstructing the trajectory followed by the mobile device includes a pedestrian dead reckoning implementing a detection of steps and change of walking direction during the movement.

8.  The method according to any claim 1 to 7, wherein the superimposition validity metric is an indicator representative of the distance, for each access terminal, between each of the locations transformed in the reference frame of reference and the location of the access terminal in the reference frame of reference.

9.  The method according to any claim 1 to 8, wherein determining, for each mobile device, the geometric transformation is carried out by a procrustean analysis.

10.  The method according to any claim 1 to 9, further including a step of locating, in the reference frame of reference, measurements of a received signal strength indicator carried out by the mobile devices during their movements, and a step of interpolating said measurements to carry out a mapping of the received signal strength.

11.  A non-transitory computer program including instructions which, when the program is executed on computer, lead said computer to implement the determining and modifying steps of the method according to any claim 1 to 10.

12.  A data processing device including a processor configured to implement the determining and modifying steps of the method according to any of claims 1 to 10.

**FIG. 1**

**FIG. 2**

**FIG. 3**

$$A_j R_{ji} + T_{ji}$$

FIG. 4

FIG. 5a

FIG. 5b

FIG. 5c

**RÉFÉRENCES CITÉES DANS LA DESCRIPTION**

**Documents brevets cités dans la description**

- WO 2013141991 A1
- WO 2012167301 A1
- WO 2017084468 A1

**Littérature non-brevet citée dans la description**

- **R. LIU et al.** Selective AP-sequence Based Indoor Localization without Site Survey. *Vehicular Technology Conférence (VTC Spring),* 2016